# EUROPEAN PATENT SPECIFICATION

(11) **EP 2 935 972 B1**
(45) Date of publication and mention of the grant of the patent: **06.09.2017**
(21) Application number: 13821479.6
(22) Date of filing: 20.12.2013
(51) Int. Cl.: F16M 11/04, F16M 11/12

(54) **APPARATUS AND METHODS OF POSITIONING AN OBJECT USING AN ADJUSTMENT BLOCK**
VORRICHTUNG UND VERFAHREN ZUM POSITIONIEREN EINES OBJEKTS MITTELS EINES EINSTELLUNGSBLOCKS
APPAREIL ET PROCÉDÉS DE POSITIONNEMENT D'UN OBJET À L'AIDE D'UN BLOC D'AJUSTEMENT

(30) Priority: 21.12.2012 US 201261745433 P; 15.03.2013 US 201361792825 P
(43) Date of publication of application: 28.10.2015
(73) Proprietor: Materialise N.V., 3001 Leuven (BE)
(72) Inventor: MOENS, Bert Luc Jan, B-2860 Sint-Katelijne-Waver (BE)
(74) Representative: DeltaPatents B.V.
(86) International application number: PCT/EP2013/077860
(87) International publication number: WO 2014/096432

(56) References cited:
- EP-A1- 0 263 627
- JP-A- 2003 200 367
- US-A- 5 901 936
- US-A1- 2005 159 075
- US-A1- 2012 168 593

## Description

### CROSS REFERENCE TO RELATED APPLICATIONS

This application claims the benefit of U.S. Provisional Application No. 61/792,825, filed on March 15, 2013, and of U.S. Provisional Application No. 61/745,433, filed on December 21, 2012, the disclosure of each of which is hereby incorporated by reference in its entirety.

### BACKGROUND OF THE INVENTION

### Field of the Invention

This application relates to an apparatus and methods of positioning an object using an adjustment block. In particular, this application relates to a positioning apparatus with an adjustment block configured to move with six degrees of freedom and a closed loop actuating scheme.

### Description of the Related Art

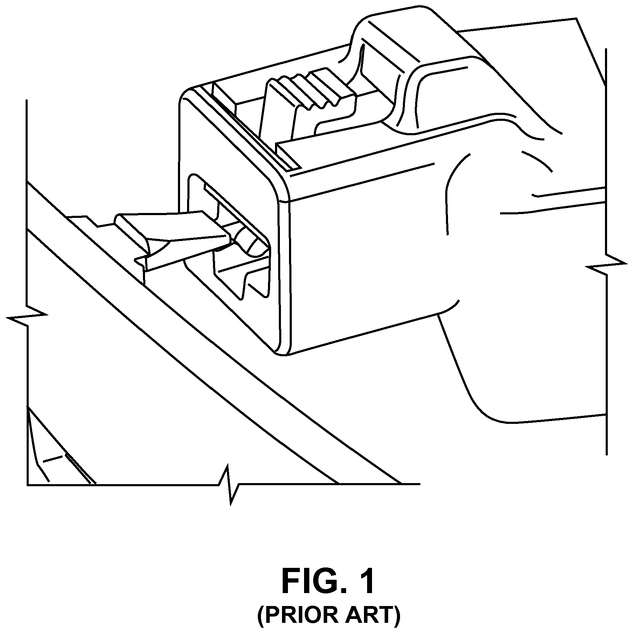

Positioning systems that can precisely locate an object relative to a working surface have many important applications. For example, additive manufacturing (AM), such as computer aided manufacturing (CAM), often requires the tool to be positioned with a high precision. In the automobile industry, precise locators play an important role in the quality control of parts production and assembly. As shown in FIG. 1, a locator has to be accurately positioned to simulate the clamping of a plastic part in a car. Other applications of highly accurate positioning systems include adjustment of surgical guides in orthopedic surgeries and accurate positioning of a robot hand and calibration of laser-optics.

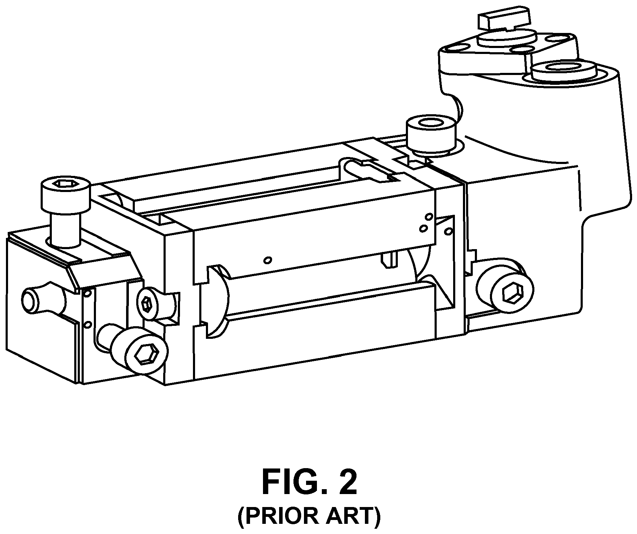

Most positioning devices today fail to provide the necessary precision in the AM process, in part due to their limited range of movement and difficult adjustment procedures. For example, the device in FIG. 2 consists of three perpendicular faces and three perpendicular screws that need to be released all together for any adjustment with shims. This device requires severa steps for each adjustment, and the position can only be measured at the end of an adjustment cycle. Other positioning tools, such as translation and composition tables, have all degrees of freedom connected in series and result in errors and inaccuracies. Therefore, there is a need for an improved positioning apparatus.

It is noted that US patent number US 5,901,936 describes a six-degree-of-freedom multi-axes positioning apparatus comprised of a geometry of six independent angle connectors.

### SUMMARY OF THE INVENTION

Various implementations of systems, methods, and apparatus within the scope of the appended claims each have several aspects, no single one of which is solely responsible for the desirable attributes described herein. Without limiting the scope of the appended claims, some prominent features are described herein.

The present application relates generally to an apparatus and methods of positioning an object using an adjustment block. Details of one or more implementations of the subject matter described in this specification are set forth in the accompanying drawings and the description below. Other features, embodiments, and advantages will become apparent from the description, the drawings, and the claims.

One aspect of this disclosure provides an apparatus for positioning an object, the apparatus comprising at least one adjustment block, wherein each adjustment block comprises a support structure configured to mount an object, a base structure, and a plurality of hinged members arranged between the base structure and the support structure, wherein each hinged member is configured to pivot relative to the support structure; an actuator system configured to actuate the adjustment block to move the object to a predetermined position; and a locking system configured to maintain a position of the adjustment block.

In some embodiments, the adjustment block further comprises a first compliant universal joint coupling a first shaft of the hinged member to the support structure; a compliant revolute joint coupling a second shaft of the hinged member to the base structure; and a second compliant universal joint coupling the first shaft to the second shaft of the hinged member.

In other embodiments, the support structure is configured to move with six degrees of freedom.

In some embodiments, six hinged members are arranged substantially in parallel between the base structure and the support structure.

In some embodiments, the actuator system comprises a sensor configured to monitor and measure a position of the object and a position of the adjustment block, and a controller configured to actuate the adjustment block to move the object to a predetermined position.

In other embodiments, the controller further comprises a software control element configured to calculate movement of the hinged members based on a difference between the position of the object and the predetermined position of the object.

In some embodiments, the software control element comprises a mechanism configured to simultaneously or sequentially implement steps of measuring a position of the object, calculating a direction of movement of the hinged members based on a difference between the position of the object and the predetermined position, and actuating the adjustment block based on the direction of movement, until the object reaches the predetermined position.

In some embodiments, the controller further comprises a mechanism to move the hinged members individually and collectively.

In other embodiments, the actuator system is manually operated.

In some embodiments, the actuator system is automated.

In some embodiments, the actuator system is external to the adjustment block.

In some embodiments, the locking system comprises a plurality of hollow structures, each hollow structure having a first end attached to the base structure of the adjustment block and a second end attached to the support structure of the adjustment block.

In other embodiments, the second end of the hollow structure is configured to move freely with the support structure.

In some embodiments, a position of the adjustment block is maintained after a resin material is added and cured inside the hollow structures.

In some embodiments, the locking system is external to the adjustment block.

In other embodiments, the locking system is integrated into the adjustment block.

In other embodiments, a first adjustment block and a second block are stacked together

In some embodiments, the first adjustment block is configured to make smaller and more precise adjustment than the second adjustment block.

Another aspect of the present disclosure relates to a method for positioning an object to a predetermined position, the method comprising positioning the object on an adjustment block, wherein the adjustment block comprises a support structure configured to mount the object, a base structure, and a plurality of hinged members arranged between the base structure and the support structure, each hinged member being configured to pivot relative to the support structure; measuring a position of the object; calculating a direction of movement of the hinged members based on a difference between the position of the object and a predetermined position; actuating the adjustment block based on the direction of movement; repeating the sequential steps of measuring, calculating, and actuating continuously until the object reaches the predetermined position; and locking the adjustment block to maintain the position of the object.

In some embodiments, the adjustment block is manually actuated.

In other embodiments, the adjustment block is automated.

In some embodiments, an actuator system is used to implement the steps of measuring, calculating, and actuating, the actuator system comprising a position sensor configured to monitor and measure the position of the object and a position of the adjustment block, and a controller configured to actuate the adjustment block to move the object to a predetermined position.

In some embodiments, a software control element is used to simultaneously or sequentially implement the steps of measuring, calculating, actuating in a closed loop scheme until the predetermined position of the object is achieved.

In other embodiments, the adjustment block comprises six hinged members arranged substantially in parallel between the base structure and the support structure.

Some embodiments provide stacking a first adjustment block on top of a second adjustment block, wherein the first adjustment block is configured to make smaller and more precise adjustment than the second adjustment block.

In other embodiments, the step of actuating comprises actuating the second adjustment block followed by actuating the first adjustment block.

Certain embodiments provide a method of manufacturing an adjustment block, the method comprising designing the adjustment block to create an adjustment block design; and manufacturing the adjustment block using an additive manufacturing technique, wherein the adjustment block includes a support structure configured to mount an object, a base structure, and a plurality of hinged members arranged between the base structure and the support structure, wherein each hinged member is configured to move relative to the support structure.

### BRIEF DESCRIPTION OF THE DRAWINGS

The following description of the figures is merely exemplary in nature and is not intended to limit the present teachings, their application or uses. Throughout the drawings, corresponding reference numerals indicate like or corresponding parts and features. Note that the relative dimensions of the following figures may not be drawn to scale.
FIG. 1 illustrates an example of datum in a locator.
FIG. 2 illustrates an example of an adjustment device with shims.
FIG. 3 illustrates an example of a three dimensional adjustment block.
FIG. 4 illustrates an example of a two dimensional view of an adjustment block.
FIG. 5 illustrates an example of a compliant universal joint.
FIG. 6 illustrates an example of a compliant revolute joint.
FIG. 7 illustrates an example of a locking system.
FIG. 8 illustrates an example of a three dimensional adjustment block with compressed hinged members.
FIG. 9 illustrates a method of positioning an object with a closed loop scheme.

### DETAILED DESCRIPTION

The following detailed description is directed to certain specific embodiments. However, the teachings herein can be applied in a multitude of different ways. In this description, reference is made to the drawings wherein like parts are designated with like numerals throughout.

The present application will be described with respect to particular embodiments but the invention is not limited thereto but only by the claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" when referring to recited components, elements or method steps also include embodiments which "consist of" said recited components, elements or method steps.

Reference throughout this specification to "one embodiment," "an embodiment," or "some embodiments" means that a particular feature, structure or characteristic described in connection with the embodiment or embodiments is included in at least one embodiment of the present application. Thus, appearances of the phrases "in one embodiment," "in an embodiment," "in some embodiments," or "in other embodiments" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the features of the claimed embodiments can be used in any combination.

The terms "connected," "attached" and "coupled," and variations thereof, as used herein include direct connections, such as being contiguously formed with, or glued, or otherwise attached directly to, on, within, etc. another element, as well as indirect connections where one or more elements are disposed between the connected elements. "Connected," "attached" and "coupled" may refer to a permanent or non-permanent (i.e., removable) connection.

The term "on" that is used to designate that an element is on another element or located on a different layer or a layer includes both a case where an element is located directly on another element or a layer and a case where an element is located on another element via another layer or still another element.

The term "integrated," as used herein, refers to being positioned on, being a physically integral part of, or being attached to (with or without the capability to be subsequently unattached).

The terms "internal" and "external" are used relative to the inside and outside of the adjustment block, the actuator system, or the locking system, as appropriate.

The term "stack" or variations thereof, as used herein, refers to direct connections, such as being contiguously formed with, or glued, or otherwise attached directly to, on, within, etc. another element, as well as indirect connections where one or more elements are disposed between the stacked elements. "Stack" may refer to a permanent or non-permanent (i.e., removable) connection. "Stack" may refer to the stacked elements being joined at any directions. For example, the stacked elements can be positioned on top of each other or positioned side by side.

Although the terms "first, second, and so forth" are used to describe diverse constituent elements, such constituent elements are not limited by the terms. The terms are used only to discriminate a constituent element from other constituent elements. Accordingly, in the following description, a first constituent element may be a second constituent element.

The apparatus described herein may be applied to position an object in a measurement fixture. For example, it can be used to manipulate the position and orientation of locators in measurement fixtures such as those disclosed in United States Patent Publication No. 20130031753, which is incorporated by reference herein. Other applications of the apparatus described herein may include adjustment of guides in orthopedic surgeries and accurate positioning of a robot hand and calibration of laser-optics.

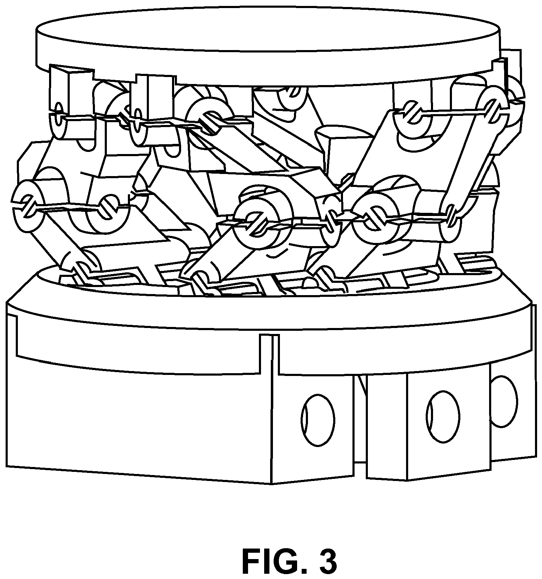

FIG. 3 shows an example of an adjustment block. In FIG. 3, the adjustment block 300 has a support structure 301 in the nature of a support or platform for the object (not shown). The support structure 301 can include any structure suitable to receive an object, and the object may be fixed or removably attached to the support structure. The object may be mounted on the support structure 301 through any suitable means, such as by adhesive, glues, bolts, screws, clamps, rivets, magnetic attraction, welding, fusing, or other means or combination of any such means. The adjustment block also includes a base structure 302 spaced from the support structure 301.

The support structure 301 and the base structure 302 are joined together by a plurality of hinged members 303. FIG. 3 shows six hinged members arranged substantially in parallel between the support structure 301 and the base structure 302, but the number of hinged members may be fewer or more than six. Each of the hinged members is pivotally linked to the support structure 301. The hinged members may be arranged substantially in parallel positioned on the support structure 301 and the base structure 302. The hinged members can be arranged either symmetrically or asymmetrically between the support and base structures. The hinged members may have the same or different length. The term substantially in parallel is not limited to mean strictly in parallel, but also covers a degree of variation from a strictly parallel relationship, the extent of the degree of variation being limited so as not to impede the function of the adjustment block.

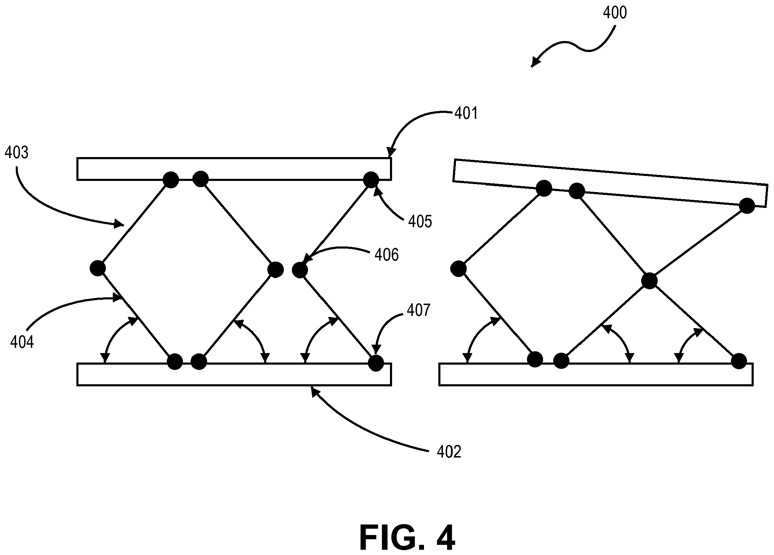

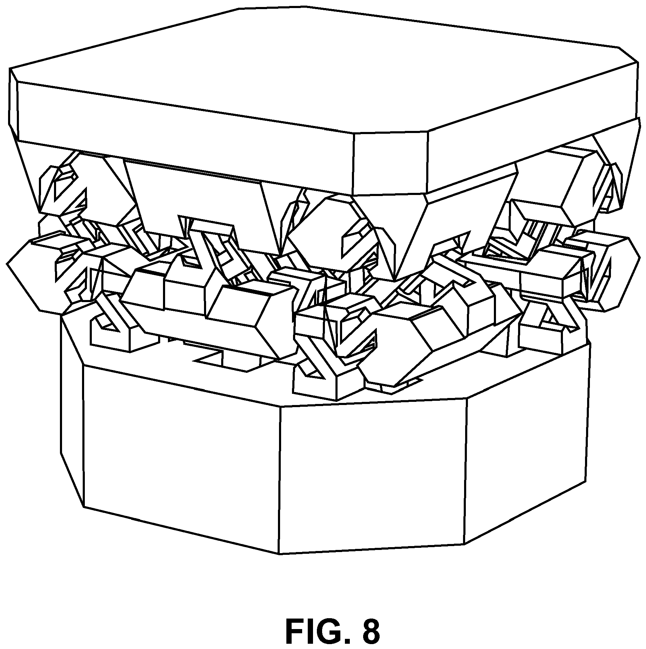

FIG. 4 illustrates a two dimensional view of a hinged member. As shown in FIG. 4, each hinged member 400 includes two shafts, with the first shaft 403 coupled to the support structure 401 through a first compliant universal joint 405 and the second shaft 404 coupled to the base structure 402 through a compliant revolute joint 407. The first shaft 403 is coupled to the second shaft 404 though a second compliant universal joint 406. The first and the second shafts of each hinged member may be of the same or different length and may rotate relative to each other. The actuation angle between the first and second shafts can range from 0° to 360°. FIG. 8 shows an example of a three dimensional adjustment block with compressed hinged members. The lengths of the first and second shafts can be longer or shorter depending on the desired operational range or accuracy. The hinged members can be made shorter or longer to achieve a desired operational range or accuracy. The size of the apparatus can be scaled up or down to accommodate the size of the object to be positioned or to achieve a desired operational range and accuracy.

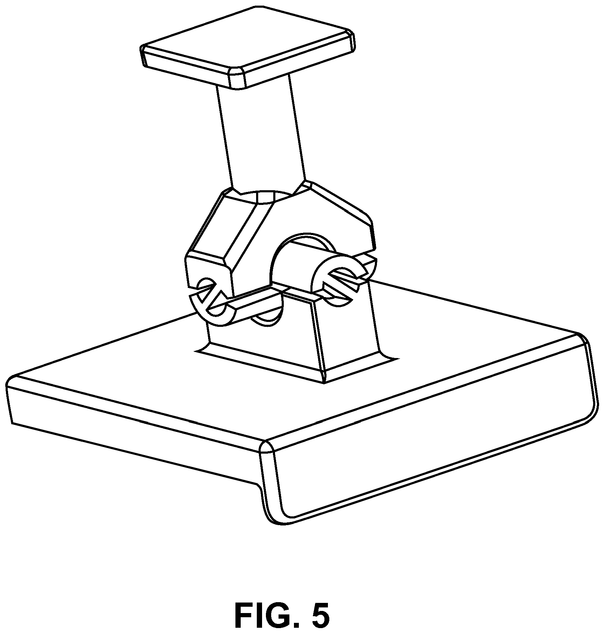

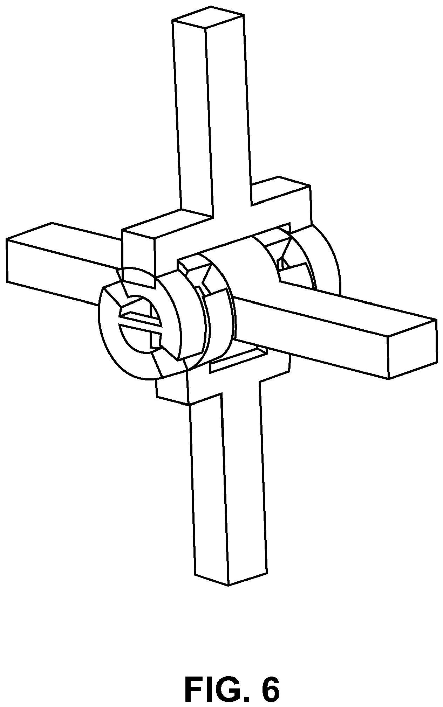

FIG. 5 illustrates an example of a compliant universal joint. The compliant universal joint is a component of the adjustment block and allows the shaft to rotate around two axes. FIG. 6 illustrates an example of a compliant revolute joint. The compliant revolute joint is also a component of the adjustment block and allows the shaft to rotate around one ax. A compliant universal joint may be a traditional universal joint or a modified universal joint with a mechanism that behaves similar to a spring loaded universal joint. A compliant revolute joint may be a traditional revolute joint or a modified revolute joint with a mechanism that behaves similar to a spring loaded revolute joint.

The position and orientation of the support structure relative to the base structure and therefore the position and orientation of the object relative to the base structure can be adjusted by simultaneously manipulating the positions and orientations of the hinged members. The manipulation of the position and orientation of the hinged members can allow the support structure to move with six degrees of freedom. That is, the support structure can move in a linear direction along each of the three orthogonal axes and rotate along each of the three axes or any combination of those.

The adjustment block can be manipulated by using an actuator system. The actuator system may be fixed or removably coupled to the adjustment block. The actuator system may include a sensor configured to monitor and measure a position and orientation of the object and the different components of the adjustment block. For example, the sensor may measure the position and orientation of the support structure and also the angular positions of the hinged members. The sensor is operatively linked to the actuating system and can provide signals indicative of the positions and orientations of the object and of the different components of the adjustment block.

The actuator system may also have a controller that is configured to actuate the adjustment block. The controller is operatively joined to the actuator system to control the position and orientation of the adjustment block. One example of the controller can be a worm-gear structure. The controller may move the adjustment block in response to the position signals generated by the sensor. The controller may be automated or manually operated. The controller may also include a mechanism to move the hinged members individually, collectively, or partially. The hinged members may be moved simultaneously or separately. The actuator system may be automated or manually operated. An automated actuator system can provide a faster adjustment than other types of positioning apparatus, such as a positioning apparatus using shims. The actuator system may be external to or integrated into the adjustment block.

The actuator system may include a software control element configured to analyze the measurement results and calculate the movement of the hinged members based on the difference between the actual position and the predetermined position of the object. The actuator system, through the software control element, may simultaneously or sequentially implementing the steps of measuring the position of the object and the adjustment block, calculating the movement of the hinged members based on the difference between the measured position and the predetermined position, and adjusting the position and orientation of the adjustment block based on the calculated movement, until the object reaches the predetermined position with a desired accuracy. The software control element may be applied to analyze the measurement results and calculate the movement of the hinged members or the adjustment block to set each of the adjustment blocks to the pre-determined position.

The operational range and the resolution of the adjustment block may vary depending on the relative positioning of the joints on the hinged members. By changing the relative positioning of the joints in the adjustment block, the operational range may be increased and the resolution may be reduced, or the operational range may be reduced for a better resolution, depending on the desired properties of the apparatus described herein. For example, when the apparatus described herein is applied in positioning fixtures for automotive, the operational range may be set to 2 mm in all directions and the resolution may be set to 50 µm with a displacement of the top joints from the bottom joints at a 10° actuation angle.

If a combination of a bigger operational range and high accuracy is needed, two or more adjustment blocks can be stacked in series. When two adjustment blocks are stacked together, the one with the bigger operational range and lower resolution is adjusted first so the object comes within the smaller range of the second adjustment block. Next the second adjustment block with higher resolution is adjusted to achieve the desired accuracy. When more than two adjustment blocks are stacked together, the one with the biggest operational range and lowest resolution is adjusted first, followed by the adjustment block with the second biggest operational range and second lowest resolution; and the adjustment blocks with the smallest operational range and highest resolution is adjusted last. The adjustment blocks may be stacked in any directions. Examples include, but not limited to, one adjustment block being positioned on top of the support structure of another adjustment block.

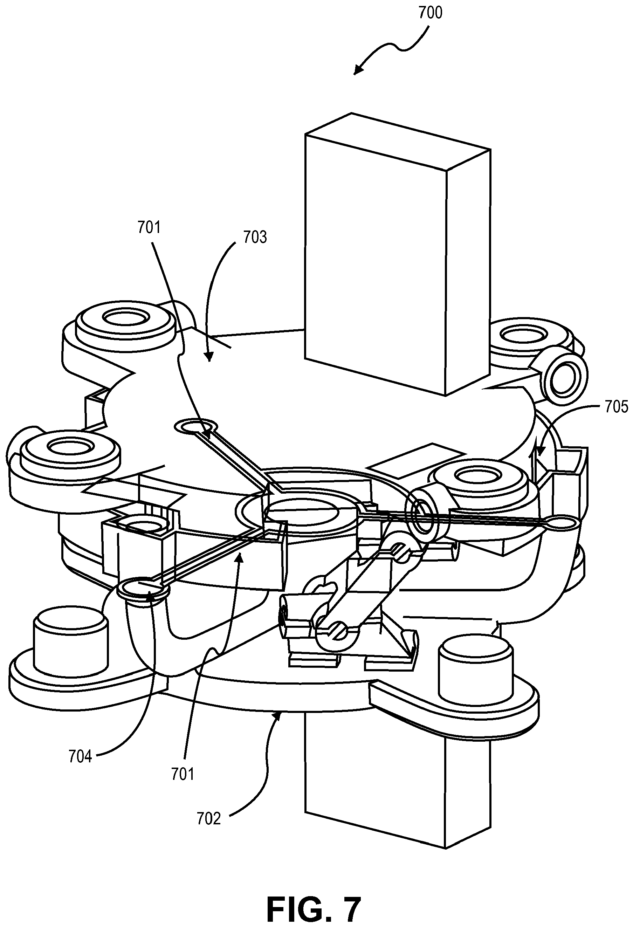

Once the object reaches the predetermined position with the desired accuracy, the position of the adjustment block may be maintained through a locking system. The locking system may be integrated into or external to the adjustment block. FIG. 7 is an example of a locking system integrated into the adjustment block. In FIG. 7, the locking system 700 comprises a plurality of hollow structures 701 attached to both the base structure 702 and the support structure 703 of the adjustment block. The hollow structure 701 includes hollow ribs, channels, tubes, cables, and any other structures suitable to receive a filler material. The hollow structure 701 includes a first end 704 attached to the base structure and a second end 705 attached to the support structure 703 of the adjustment block. The second end 705 of the hollow structure may move freely with the support structure 703. The hollow structure may be perforated to allow the addition of a resin material into the hollow structure.

After the adjustment block is set to a desired position, a filler material is added into the hollow structures 701. The filler material may be a resin or any other types of materials that become hard and stiff upon curing. Examples of the resin material include, but are not limited to, epoxy, polyurethane, and any types of glue. When the resin material is fully cured, the hollow structures 701 become stiff and the movement of the support structure 703 relative to the base structure 702 of the adjustment block is restricted. Therefore, the adjustment block is maintained at the desired position. Additionally, the use of a cured filler material that is hard and stiff may increase the mechanical strength and stiffness of the adjustment block, thus allowing the application of the adjustment block in an environment that requires higher mechanical stability.

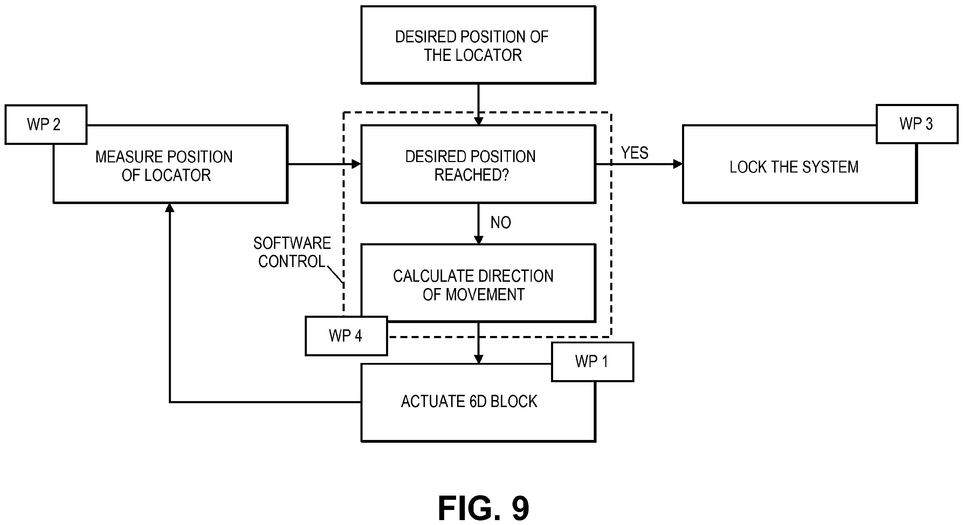

FIG. 9 illustrates a method of positioning an object to a predetermined position using the apparatus described herein. The method comprises positioning the object on an adjustment block; measuring a position of the object, calculating a direction of movement of the hinged members based on a difference between the actual position and the predetermined position of the object; actuating the adjustment block based on the calculated direction of movement; repeating the steps of measuring, calculating, and actuating continuously until the object reaches the predetermined position; and locking the adjustment block to maintain the position of the object.

In some embodiments, an automated calibration method can be achieved by including a position sensor and/or a controller to the automated calibration device. The actual position of the object and the adjustment block can be measured at discrete times by, for example, a tactile CMM (coordinate measurement machine), or can be monitored continuously, creating a dynamic closed loop system. A software control element may be used to simultaneously or sequentially implement the steps of measuring, calculating, and actuating in a closed loop scheme. After the position of the object is measured, the software element may be applied to analyze the measurement results and calculate movement of the hinged members to move the adjustment block to the correct position. The steps in the closed loop scheme may be repeated one or more times until a certain level of accuracy has been reached.

The actuation step may be automated or manually operated. An automated actuating step allows direct adjustment and thus provides a faster adjustment than other calibration devices using shims. Further, this automated actuation has a reduced material cost due to the elimination of milled parts, and the external adjustment of the adjustment block reduces both weight and cost.

The automated calibration device described above can be partially or completely made by additive manufacturing. A method of manufacturing an automated calibration device may include designing the components of the automated calibration device to create automated calibration device design. In some embodiments, the 3-D adjustment block can be designed and manufactured.

The 3-D adjustable block may be built using additive manufacturing. An advantage of building the 3-D adjustment block using additive manufacturing is that it requires little or no assembly. The 3-D adjustable element may include passive mechanics. The production cost and weight of the automated calibration device may be reduced by separating the actuators from the passive mechanics of the 3-D adjustable element.

A method of manufacturing an adjustment block using the additive manufacturing comprises designing the adjustment block to create an adjustment block design; and manufacturing the adjustment block using an additive manufacturing technique, wherein the adjustment block includes a support structure configured to mount an object, a base structure, and a plurality of hinged members arranged between the base structure and the support structure, wherein each hinged member is configured to pivot relative to the support structure.

A common feature of these techniques is that objects are typically built layer by layer. Stereo lithography, for example, utilizes a vat of liquid photopolymer "resin" to build an object a layer at a time. On each layer, an electromagnetic ray, e.g. one or several laser beams which are computer-controlled, traces a specific pattern on the surface of the liquid resin that is defined by the two-dimensional cross-sections of the object to be formed. Exposure to the electromagnetic ray cures, or, solidifies the pattern traced on the resin and adheres it to the layer below. After a coat had been polymerized, the platform descends by a single layer thickness and a subsequent layer pattern is traced, adhering to the previous layer. A complete 3-D object is formed by this process.

Selective laser sintering (SLS) uses a high power laser or another focused heat source to sinter or weld small particles of plastic, metal, or ceramic powders into a mass representing the 3-D object to be formed.

Fused deposition modeling (FDM) and related techniques make use of a temporary transition from a solid material to a liquid state, usually due to heating. The material is driven through an extrusion nozzle in a controlled way and deposited in the required place as described, for example, in U.S. Pat. No. 5,141,680.

Foil-based techniques fix coats to one another by means of gluing or photo polymerization or other techniques and cut the object from these coats or polymerize the object.

Typically AM techniques start from a digital representation of the 3-D object to be formed. Generally, the digital is sliced into a series of cross-sectional layers which can be overlaid to form the object as a whole. The AM apparatus uses this data for building the object on a layer-by-layer basic. The cross-sectional data representing the layer data of the 3-D object can be generated using a computer system and computer aided design and manufacturing (CAD/CAM) software.

A selective laser sintering (SLS) apparatus can be used for the manufacture of a calibration apparatus template instead of a computer model. It should be understood however, that various types of rapid manufacturing and tooling can be used for accurately fabricating these surgical templates including, but not limited to, stereolithography (SLA), Fused Deposition Modeling (FDM) or milling.

The calibration apparatus described above (or parts thereof) can be manufactured using different materials. In some embodiments, only materials that are biocompatible (e.g. USP class VI compatible) with the human body are used. In some embodiments, a calibration apparatus template can be formed from a heat-tolerable material allowing it to tolerate high-temperature sterilization. In some embodiments, if SLS is used as an AM technique, the calibration apparatus template can be fabricated from a polyamide such as PA 2200 as supplied by EOS, Munich, Germany or any other material known by those skilled in the art can also be used.

The invention disclosed herein can be implemented as a method, apparatus, or article of manufacture using standard programming or engineering techniques to produce software, firmware, hardware, or any combination thereof. The term "article of manufacture" as used herein refers to code or logic implemented in hardware or non-transitory computer readable media such as optical storage devices, and volatile or non-volatile memory devices or transitory computer readable media such as signals, carrier waves, etc. Such hardware can include, but is not limited to, field programmable gate arrays (FPGAs), application-specific integrated circuits (ASICs), complex programmable logic devices (CPLDs), programmable logic arrays (PLAs), microprocessors, or other similar processing devices.

While this invention has been described in connection with what are presently considered to be practical embodiments, it will be appreciated by those skilled in the art that various modifications and changes may be made without departing from the scope of the present disclosure. It will also be appreciated by those of skill in the art that parts mixed with one embodiment are interchangeable with other embodiments; one or more parts from a depicted embodiment can be included with other depicted embodiments in any combination. For example, any of the various components described herein and/or depicted in the Figures may be combined, interchanged or excluded from other embodiments. With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

While the present disclosure has described certain exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. An apparatus for positioning an object, the apparatus comprising:
at least one adjustment block, wherein each adjustment block comprises
a support structure configured to mount an object,
a base structure, and
a plurality of hinged members arranged between the base structure and the support structure, wherein each hinged member includes at least one compliant joint and is configured to pivot relative to the support structure;
an actuator system configured to actuate the adjustment block to move the object to a predetermined position; and
a locking system configured to maintain a position of the adjustment block.

2. The apparatus of claim 1, wherein the actuator system comprises:
a sensor configured to monitor and measure a position of the object and a position of the adjustment block; and
a controller configured to actuate the adjustment block to move the object to a predetermined position.

3. The apparatus of claim 2, wherein the controller further comprises a mechanism to move the hinged members individually and collectively.

4. The apparatus of claim 1, wherein the actuator system further comprises a software control element configured to calculate movement of the hinged members based on a difference between the position of the object and the predetermined position of the object, wherein the software control element comprises a mechanism configured to simultaneously or sequentially implement steps of measuring a position of the object, calculating a direction of movement of the hinged members based on a difference between the position of the object and the predetermined position, and actuating the adjustment block based on the direction of movement, until the object reaches the predetermined position.

5. The apparatus of claim 1, wherein the locking system comprises a plurality of hollow structures, each hollow structure having a first end attached to the base structure of the adjustment block and a second end attached to the support structure of the adjustment block.

6. The apparatus of claim 5, wherein the second end of the hollow structure is configured to move freely with the support structure.

7. The apparatus of claim 5, wherein a position of the adjustment block is maintained after a resin material is added and cured inside the hollow structures.

8. The apparatus of claim 1, wherein the locking system is integrated into the adjustment block.

9. The apparatus of claim 1, wherein the locking system is external to the adjustment block.

10. The apparatus of claim 1, wherein a first adjustment block and the second adjustment block are stacked together, and wherein the first adjustment block is configured to make smaller and more precise adjustment than the second adjustment block.

11. A method for positioning an object to a predetermined position, the method comprising:
positioning the object on an adjustment block, wherein the adjustment block comprises a support structure configured to mount the object, a base structure, and a plurality of hinged members arranged between the base structure and the support structure, each hinged member including at least one compliant joint and being configured to pivot relative to the support structure;
measuring a position of the object;
calculating a direction of movement of the hinged members based on a difference between the position of the object and the predetermined position;
actuating the adjustment block based on the direction of movement;
repeating the steps of measuring, calculating, and actuating continuously until the object reaches the predetermined position; and
locking the adjustment block to maintain the position of the object.

12. The method of claim 11, wherein an actuator system is used to implement the steps of measuring, calculating, and actuating, the actuator system comprising a position sensor configured to monitor and measure the position of the object and a position of the adjustment block, and a controller configured to actuate the adjustment block to move the object to the predetermined position.

13. The method of claim 11, wherein a software control element is used to simultaneously or sequentially implement the steps of measuring, calculating, actuating in a closed loop until the predetermined position of the object is achieved.

14. The method of claim 11, further comprising stacking a first adjustment block on top of a second adjustment block, wherein the first adjustment block is configured to make smaller and more precise adjustment than the second adjustment block, and wherein the step of actuating comprises actuating the second adjustment block followed by actuating the first adjustment block..

15. A method of manufacturing an adjustment block, the method comprising, designing the adjustment block to create an adjustment block design; and
manufacturing the adjustment block using an additive manufacturing technique, wherein the adjustment block includes
a support structure configured to mount an object,
a base structure, and
a plurality of hinged members arranged between the base structure and the support structure, wherein each hinged member includes at least one compliant joint and is configured to pivot relative to the support structure.

## Patentansprüche

1. Eine Vorrichtung zum Positionieren eines Objekts, wobei das Gerät Folgendes umfasst:
mindestens einen Einstellblock, wobei jeder Einstellblock Folgendes umfasst:
eine Halterungsstruktur, die konfiguriert ist, um ein Objekt daran zu montieren,
eine Basisstruktur, und
eine Vielzahl von Scharnierelementen, die zwischen der Basisstruktur und der Halterungsstruktur angeordnet sind, wobei jedes Scharnierelement mindestens ein nachgiebiges Gelenk umfasst und konfiguriert ist, um in Bezug auf die Halterungsstruktur geschwenkt zu werden;
ein Betätigungssystem, das konfiguriert ist, um den Einstellblock zu betätigen, um das Objekt in eine vorgegebene Position zu bewegen; und
ein Arretiersystem, das konfiguriert ist, um eine Position des Einstellblocks aufrechtzuerhalten.

2. Die Vorrichtung nach Anspruch 1, wobei das Betätigungssystem Folgendes umfasst:
einen Sensor, der konfiguriert ist, um eine Position des Objekts und eine Position des Einstellblocks zu überwachen und zu messen; und
eine Steuereinheit, die konfiguriert ist, um den Einstellblock zu betätigen, um das Objekt in eine vorgegebene Position zu bewegen.

3. Die Vorrichtung nach Anspruch 2, wobei die Steuereinheit weiterhin einen Mechanismus umfasst, um die Scharnierelemente einzeln und kollektiv zu bewegen.

4. Die Vorrichtung nach Anspruch 1, wobei das Betätigungssystem weiterhin ein Softwaresteuerungselement umfasst, das konfiguriert ist, um die Bewegung der Scharnierelemente basierend auf einer Differenz zwischen der Position des Objekts und der vorgegebenen Position des Objekts zu berechnen, wobei das Softwaresteuerungselement einen Mechanismus umfasst, der konfiguriert ist, um Schritte des Messens einer Position des Objekts, des Berechnens einer Bewegungsrichtung der Scharnierelemente basierend auf einer Differenz zwischen der Position des Objekts und der vorgegebenen Position und des Betätigens des Einstellblocks basierend auf der Bewegungsrichtung gleichzeitig oder sequentiell auszuführen, bis das Objekt die vorgegebene Position erreicht.

5. Die Vorrichtung nach Anspruch 1, wobei das Arretiersystem eine Vielzahl von Hohlstrukturen umfasst, wobei jede Hohlstruktur ein an der Basisstruktur des Einstellblocks angebrachtes erstes Ende und ein an der Halterungsstruktur des Einstellblocks angebrachtes zweites Ende aufweist.

6. Die Vorrichtung nach Anspruch 5, wobei das zweite Ende der Hohlstruktur konfiguriert ist, um sich frei mit der Halterungsstruktur zu bewegen.

7. Die Vorrichtung nach Anspruch 5, wobei eine Position des Einstellblocks aufrechterhalten bleibt, nachdem ein Harzmaterial hinzugefügt wurde und innerhalb der Hohlstrukturen ausgehärtet wurde.

8. Die Vorrichtung nach Anspruch 1, wobei das Arretiersystem in den Einstellblock integriert ist.

9. Die Vorrichtung nach Anspruch 1, wobei sich das Arretiersystem außerhalb des Einstellblocks befindet.

10. Die Vorrichtung nach Anspruch 1, wobei ein erster Einstellblock und der zweite Einstellblock zusammengestapelt sind, und wobei der erste Einstellblock konfiguriert ist, um kleinere und präzisere Einstellungen vorzunehmen als der zweite Einstellblock.

11. Ein Verfahren zum Positionieren eines Objekts an einer vorgegebenen Position, wobei das Verfahren Folgendes umfasst:
Positionieren des Objekts auf einem Einstellblock, wobei der Einstellblock eine Halterungsstruktur, die konfiguriert ist, um das Objekt daran zu montieren, eine Basisstruktur und eine Vielzahl von Scharnierelementen umfasst, die zwischen der Basisstruktur und der Halterungsstruktur angeordnet sind, wobei jedes Scharnierelement mindestens ein nachgiebiges Gelenk umfasst und konfiguriert ist, um in Bezug auf die Halterungsstruktur geschwenkt zu werden;
Messen einer Position des Objekts;
Berechnen einer Bewegungsrichtung der Scharnierelemente basierend auf einer Differenz zwischen der Position des Objekts und der vorgegebenen Position;
Betätigen des Einstellblocks basierend auf der Bewegungsrichtung;
Wiederholen der Schritte des Messens, des Berechnens und des Betätigens auf kontinuierliche Weise, bis das Objekt die vorgegebene Position erreicht; und
Arretieren des Einstellblocks, um die Position des Objekts aufrechtzuerhalten.

12. Das Verfahren nach Anspruch 11, wobei ein Betätigungssystem verwendet wird, um die Schritte des Messens, Berechnens und Betätigens auszuführen, wobei das Betätigungssystem einen Positionssensor umfasst, der konfiguriert ist, um die Position des Objekts und eine Position des Einstellblocks zu überwachen und zu messen, und eine Steuereinheit umfasst, die konfiguriert ist, um den Einstellblock zu betätigen, um das Objekt in die vorgegebene Position zu bewegen.

13. Das Verfahren nach Anspruch 11, wobei ein Softwaresteuerungselement verwendet wird, um die Schritte des Messens, des Berechnens und des Betätigens in einer geschlossenen Schleife gleichzeitig oder sequentiell auszuführen, bis die vorgegebene Position des Objekts erreicht ist.

14. Das Verfahren nach Anspruch 11, weiterhin umfassend das Stapeln eines ersten Einstellblocks auf einen zweiten Einstellblock, wobei der erste Einstellblock konfiguriert ist, um kleinere und präzisere Einstellungen vorzunehmen als der zweite Einstellblock, und wobei der Schritt des Betätigens das Betätigen des zweiten Einstellblocks gefolgt durch das Betätigen des ersten Einstellblocks umfasst.

15. Ein Verfahren der Herstellung eines Einstellblocks, wobei das Verfahren Folgendes umfasst:
Entwerfen des Einstellblocks, um einen Einstellblockentwurf zu schaffen; und
Herstellen des Einstellblocks mithilfe einer additiven Herstellungstechnik, wobei der Einstellblock Folgendes umfasst:
eine Halterungsstruktur, die konfiguriert ist, um ein Objekt daran zu montieren,
eine Basisstruktur, und
eine Vielzahl von Scharnierelementen, die zwischen der Basisstruktur und der Halterungsstruktur angeordnet sind, wobei jedes Scharnierelement mindestens ein nachgiebiges Gelenk umfasst und konfiguriert ist, um in Bezug auf die Halterungsstruktur geschwenkt zu werden.

## Revendications

1. Un appareil pour positionner un objet, l'appareil comprenant :
au moins un bloc d'ajustement, dans lequel chaque bloc d'ajustement comprend
une structure de support configurée pour monter un objet,
une structure de base, et
une pluralité d'éléments articulés agencés entre la structure de base et la structure de support, dans lequel chaque élément articulé inclut au moins un raccord flexible et est configuré pour pivoter par rapport à la structure de support ;
un système d'actionnement configuré pour actionner le bloc d'ajustement afin de déplacer l'objet jusqu'à une position prédéterminée ; et
un système de blocage configuré pour maintenir une position du bloc d'ajustement.

2. L'appareil selon la revendication 1, dans lequel le système d'actionnement comprend :
un capteur configuré pour contrôler et mesurer une position de l'objet et une position du bloc d'ajustement ; et
un dispositif de commande configuré pour actionner le bloc d'ajustement afin de déplacer l'objet jusqu'à une position prédéterminée.

3. L'appareil selon la revendication 2, dans lequel le dispositif de commande comprend en outre un mécanisme pour déplacer les éléments articulés individuellement et collectivement.

4. L'appareil selon la revendication 1, dans lequel le système d'actionnement comprend en outre un élément de commande logicielle configuré pour calculer le déplacement des éléments articulés sur la base d'une différence entre la position de l'objet et la position prédéterminée de l'objet, dans lequel l'élément de commande logicielle comprend un mécanisme configuré pour mettre en oeuvre simultanément ou séquentiellement des étapes de mesure d'une position de l'objet, de calcul d'une direction de déplacement des éléments articulés sur la base d'une différence entre la position de l'objet et la position prédéterminée, et d'actionnement du bloc d'ajustement sur la base de la direction de déplacement, jusqu'à ce que l'objet atteigne la position prédéterminée.

5. L'appareil selon la revendication 1, dans lequel le système de blocage comprend une pluralité de structures creuses, chaque structure creuse ayant une première extrémité attachée à la structure de base du bloc d'ajustement et une seconde extrémité attachée à la structure de support du bloc d'ajustement.

6. L'appareil selon la revendication 5, dans lequel la seconde extrémité de la structure creuse est configurée pour se déplacer librement avec la structure de support.

7. L'appareil selon la revendication 5, dans lequel une position du bloc d'ajustement est maintenue après qu'un matériau résineux a été ajouté et durci à l'intérieur des structures creuses.

8. L'appareil selon la revendication 1, dans lequel le système de blocage est intégré dans le bloc d'ajustement.

9. L'appareil selon la revendication 1, dans lequel le système de blocage est extérieur au bloc d'ajustement.

10. L'appareil selon la revendication 1, dans lequel le premier bloc d'ajustement et le second bloc d'ajustement sont empilés l'un sur l'autre, et dans lequel le premier bloc d'ajustement est configuré pour créer un ajustement plus petit et plus précis que le second bloc d'ajustement.

11. Un procédé pour positionner un objet dans une position prédéterminée, le procédé comprenant :
le positionnement de l'objet sur un bloc d'ajustement, dans lequel le bloc d'ajustement comprend une structure de support configurée pour monter un objet, une structure de base, et une pluralité d'éléments articulés agencés entre la structure de base et la structure de support, chaque élément articulé incluant au moins un raccord flexible et étant configuré pour pivoter par rapport à la structure de support ;
la mesure d'une position de l'objet ;
le calcul d'une direction de déplacement des éléments articulés sur la base d'une différence entre la position de l'objet et la position prédéterminée ;
l'actionnement du bloc d'ajustement sur la base de la direction de déplacement ;
la répétition des étapes de mesure, de calcul et d'actionnement en continu jusqu'à ce que l'objet atteigne la position prédéterminée ; et
le blocage du bloc d'ajustement afin de maintenir la position de l'objet.

12. Le procédé selon la revendication 11, dans lequel un système d'actionnement est utilisé pour mettre en oeuvre les étapes de mesure, de calcul et d'actionnement, le système d'actionnement comprenant un capteur de position configuré pour contrôler et mesurer la position de l'objet et une position du bloc d'ajustement, et un dispositif de commande configuré pour actionner le bloc d'ajustement afin de déplacer l'objet jusqu'à la position prédéterminée.

13. Le procédé selon la revendication 11, dans lequel un élément de commande logicielle est utilisé pour mettre en oeuvre simultanément ou séquentiellement les étapes de mesure, de calcul, d'actionnement, dans une boucle fermée jusqu'à ce que la position prédéterminée de l'objet soit atteinte.

14. Le procédé selon la revendication 11, comprenant en outre l'empilement d'un premier bloc d'ajustement sur un second bloc d'ajustement, dans lequel le premier bloc d'ajustement est configuré pour créer un ajustement plus petit et plus précis que le second bloc d'ajustement, et dans lequel l'étape d'actionnement comprend l'actionnement du second bloc d'ajustement suivie de l'actionnement du premier bloc d'ajustement.

15. Un procédé de fabrication d'un bloc d'ajustement, le procédé comprenant,
la conception du bloc d'ajustement pour créer une conception de bloc d'ajustement ; et
la fabrication du bloc d'ajustement en utilisant une technique de fabrication additive, dans lequel le bloc d'ajustement inclut
une structure de support configurée pour monter un objet,
une structure de base, et
une pluralité d'éléments articulés agencés entre la structure de base et la structure de support, dans lequel chaque élément articulé inclut au moins un raccord flexible et est configuré pour pivoter par rapport à la structure de support.
